# EUROPEAN PATENT APPLICATION

(11) **EP 3 057 050 A1**
(43) Date of publication of application: **17.08.2016**
(21) Application number: 15178696.9
(22) Date of filing: 28.07.2015
(51) Int. Cl.: G06Q 20/20, G06Q 20/32, G06Q 20/40

(54) **MOBILE PAYMENT METHOD AND MOBILE PAYMENT APPARATUS**

(30) Priority: 16.02.2015 TW 104105399; 16.02.2015 TW 104202685
(71) Applicant: Yang, Chien-Kang, Taipei City 10682 (TW)
(72) Inventor: YANG, Chien-Kang, 10682 Taipei City (TW)
(74) Representative: Stöckeler, Ferdinand

(57) **Abstract**

A mobile payment method to be implemented using an electronic device (1) includes: receiving transaction information, establishing wireless short-range communication with a mobile device (20) provided with a payment card (22), during the wireless short-range communication, transmitting the transaction information to the mobile device (20) and receiving a payment command generated based on the transaction information from the mobile device (20), transmitting the payment command to a payment institution server (5), and receiving a payment result therefrom. The payment command enables the payment institution server (5) to identify validity of the payment card (22) and to process the payment. The payment result is generated after completing the payment.

## Description

The disclosure relates to a mobile payment method and a mobile payment apparatus, more particularly to a mobile payment method and a mobile payment apparatus using Near Field Communication to realize secure payment for a transaction.

Electronic money or plastic money, for example, a bank card, a credit card, a debit card, a smart card, etc., is related to the use of a computer system and a digital stored value system to achieve money storage and money transfers. Since a consumer may be alleviated from the necessity of bringing too much cash to make a purchase, and since a merchant is not required to check the amount of the cash to confirm a payment for the purchase, the efficiency and convenience of transaction may be promoted. Therefore, electronic money is highly accepted and widely used in present days.

However, a conventional contactless stored value smart card usually lacks the function of card authentication, or has insufficient card authentication measures. Once a fake card is used for a payment, the merchant can only bear the loss on his/her own.

Furthermore, when the conventional contactless stored value smart card is used to make purchases, the transaction record resulting from each purchas is usually stored at the end of the merchant without being transmitted immediately to a card issuer or a financial institution for proceeding with the payment settling process. Instead, a whole batch of the transaction records is only transmitted to the card issuer or the financial institution for the payment processes at the end of a business day, i.e., batch settlement. Since procedures of this batch settlement is not sufficiently timely, chances that transaction records of a merchant do not match purchase records of a smart card may increase, exposing the merchant to the risk of loss.

Therefore, the object of the present disclosure is to provide a mobile payment method and a mobile payment apparatus that allow timely payment process and that ensure secure payment for a transaction.

In a first aspect of the present disclosure, the mobile payment method is to be implemented using an electronic device which is configured to interact with a mobile device that is provided with a payment card. The electronic device communicates with a payment institution server. The mobile payment method includes the steps of:
receiving transaction information related to a transaction and to a payment for the transaction;
establishing wireless short-range communication with the mobile device;
during the wireless short-range communication, transmitting the transaction information to the mobile device through the wireless short-range communication;
during the wireless short-range communication, receiving a payment command from the mobile device through the wireless short-range communication, the payment command being generated by the mobile device based on at least the transaction information;
establishing a session with the payment institution server, the session providing a secure communication channel between the electronic device and the payment institution server;
transmitting the payment command to the payment institution server under the session, the payment command enabling the payment institution server to identify validity of the payment card based on the payment command in response to receipt of the payment command and to process the payment according to the transaction information included in the payment command after identifying the payment card as valid; and
receiving a payment result from the payment institution server under the session, the payment result being generated by the payment institution server after completing the payment.

In a second aspect of the present disclosure, the mobile payment method is to be implemented using a mobile device which is provided with a payment card and which is configured to interact with an electronic device. The mobile device and the electronic device communicate with a payment institution server. The mobile payment method includes the steps of:
establishing, by the mobile device, a wireless shot-range communication with the electronic device;
during the wireless short-range communication, receiving, by the mobile device, transaction information from the electronic device through the wireless short-range communication, the transaction information being related to a transaction and to a payment for the transaction;
during the wireless short-range communication, generating a payment command based on at least the transaction information, and transmitting the payment command thus generated to the electronic device through the wireless short-range communication, the payment command being provided by the electronic device to the payment institution server and enabling the payment institution server to identify validity of the payment card based on the payment command in response to receipt of the payment command and to process the payment according to the transaction information included in the payment command after identifying the payment card as valid; and
receiving, by the mobile device, a payment result from the payment institution server, the payment result being generated by the payment institution server after completing the payment.

In a third aspect of the present disclosure, a mobile payment apparatus is configured to interact with an electronic device which communicates with a payment institution server. The mobile payment apparatus includes a mobile device which includes a processor, a memory unit, a card slot, a short-range communication unit and a communication unit. The memory unit is coupled to the processor and stores a payment application therein. The card slot is coupled to the processor, and is removably inserted with a payment card, thereby enabling access to the payment card using the mobile device. The short-range communication unit is coupled to the processor and is configured to communicate with the electronic device. The communication unit is coupled to the processor and is configured to communicate with the payment institution server. The payment application, when executed by the processor, causes the mobile payment apparatus to
establish a wireless shot-range communication with the electronic device,
during the wireless short-range communication, receive transaction information from the electronic device through the wireless short-range communication, the transaction information being related to a transaction and to a payment for the transaction,
during the wireless short-range communication, generate a payment command based on at least the transaction information, and transmit the payment command thus generated to the electronic device through the wireless short-range communication, the payment command being provided by the electronic device to the payment institution server and enabling the payment institution server to identify validity of the payment card based on the payment command in response to receipt of the payment command and to process the payment according to the transaction information included in the payment command after identifying the payment card as valid, and
receive a payment result from the payment institution server, the payment result being generated by the payment institution server after completing the payment.

Other features and advantages of the present disclosure will become apparent in the following detailed description of the embodiments with reference to the accompanying drawings, of which:
Figure 1 is a block diagram of a system including an electronic device and an embodiment of a mobile payment apparatus according to the disclosure;
Figure 2 is a schematic view of the mobile payment apparatus being configured to communicate with various electronic devices in the system of Figure 1;
Figures 3A to 3C cooperatively illustrate a flow chart illustrating an embodiment of a mobile payment method according to the present disclosure; and
Figures 4 to 12 illustrate various messages outputted by an input/output (I/O) module of the electronic device and an I/O unit of the mobile device in different stages of the mobile payment method.

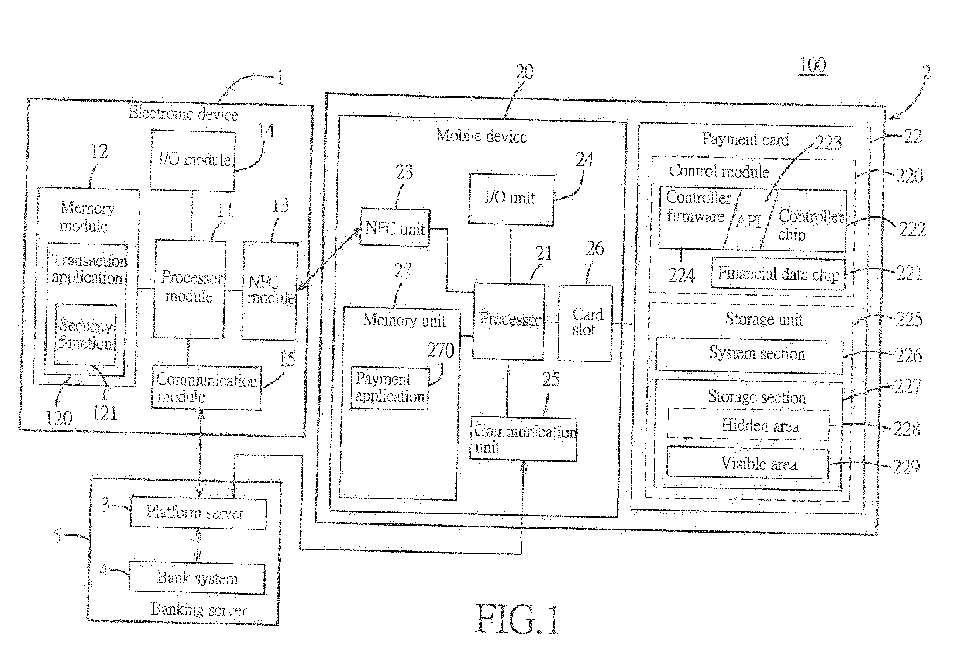

Referring to Figure 1, an embodiment of a system 100 according to the present disclosure is adapted for implementing a mobile payment method, according to the present disclosure, that processes a payment related to a transaction. The system 100 includes an electronic device 1 which is possessed, for example, by a merchant, and a mobile payment apparatus 2 which is possessed, for example, by a consumer. The mobile payment apparatus 2 includes a mobile device 20 and a payment card 22 that is removably inserted into a card slot of the mobile device 20. The electronic device 1 is configured to interact with the mobile device 20 provided with the payment card 22. The electronic device 1 and the mobile device 20 are able to communicate with a payment institution server, which is referred to as a banking server 5 hereinafter.

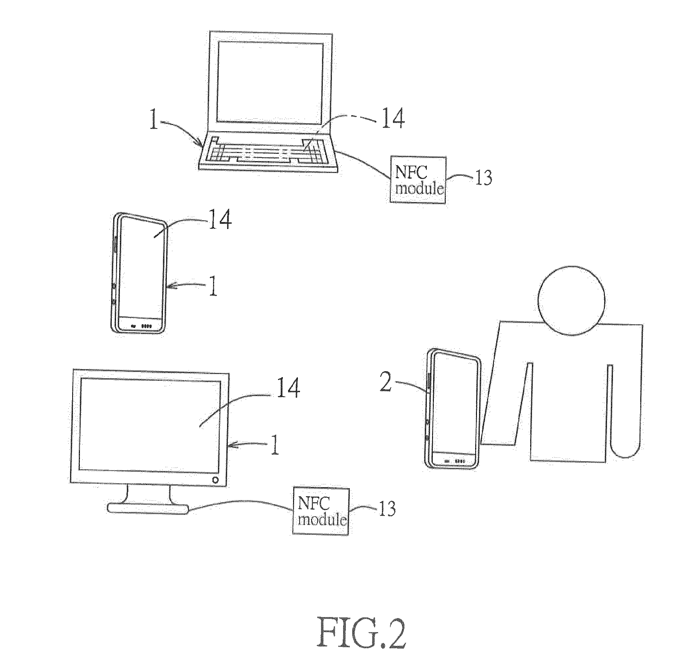

In this embodiment, the electronic device 1 may be one of a personal computer, a laptop computer, a mobile electronic device (see Figure 2), etc. The electronic device 1 is required to include network connectivity and mechanism for executing a transaction application 120 designed for causing the electronic device 1 to perform the mobile payment method of the present disclosure.

The banking server 5 may be operated by a bank that issues payment cards to customers. In this embodiment, the banking server 5 includes a platform server 3 for communicating with the electronic device 1 and the mobile device 20, and a bank system 4 that is coupled to the platform server 3. In various embodiments, the platform server 3 and the bank system 4 may be integrated as a single component (e.g., a server) or may be implemented as two separate components that communicate over a dedicated channel or session. In cases that the platform server 3 and the bank system 4 are implemented as separate components, the platform server 3 may be operated by a third party other then the bank.

The electronic device 1 is provided with a Near Field Communication (NFC) module 13, and includes a memory module 12 that stores the transaction application 120 therein, an input/output (I/O) module 14, a communication module 15, and a processor module 11 to which the aforementioned modules 12 to 15 are coupled.

In this embodiment, the electronic device 1 provided with the NFC module 13 is supportable of NFC communication functionalities, and the NFC module 13 is an external device, such as a Universal Serial Bus (USB) NFC dongle or a USB NFC reader, to be connected removably to a body of the electronic device 1. Alternatively, the NFC module 13 may be a built-in module embedded in the electronic device 1. The I/O module 14 may include, but is not limited to, a mouse/keyboard combination, a touch screen, a speaker/display combination, or any combination thereof. The communication module 15 enables the communication between the electronic device 1 and the banking server 5.

The mobile payment apparatus 2 is configured to interact with the electronic device 1. The mobile device 20 of the mobile payment apparatus 2 is, for example, a smart phone, a tablet computer, etc. The mobile device 20 includes a memory unit 27 that stores a payment application 270 therein, a card slot 26 that is removably inserted with the payment card 22, thereby enabling access to the payment card 22 using the mobile device 20, a short-range communication unit, such as an NFC unit 23, that is configured to communicate with the electronic device 1, an I/O unit 24, a communication unit 25 that is configured to communicate with the banking server 5, and a processor 21 to which the aforementioned units 23 to 26 are coupled. Alternatively, the payment card 22 may be coupled to an interface device which is to be coupled to the mobile device 20 via an USB interface thereof so as to enable the mobile device 20 to access the payment card 22 through the interface device.

In this embodiment, the NFC unit 23 is supportable of NFC communication functionalities. The I/O unit 24 may include, but is not limited to, a mouse/keyboard combination, a touch screen, a speaker/display combination, or any combination thereof. The processor 21 of the mobile device 20 executes the payment application 270 stored in the memory unit 27 and designed for causing the mobile device 20 to cooperate with the payment card 22 to perform the mobile payment method of the present disclosure.

The electronic device 1 and the mobile device 20 are able to establish wireless short-range communication, e. g. , NFC communication, therebetween via the NFC module 13 and the NFC unit 23, respectively, when the electronic device 1 and the mobile device 20 are brought into proximity of each other for conducting an NFC payment.

In this embodiment, the payment card 22 is embodied using a micro Secure Digital (SD) card. The payment card 22 includes a control module 220, a financial data chip 221 and a storage unit 225. The financial data chip 221 complies with the FISC II specification.

The control module 220 includes a controller chip 222, controller firmware 224 that is loaded in a read-only memory (ROM) (not shown in the drawings), and an application program interface (API) 223. The controller chip 222 and the ROM may be integrated using integrated circuit packaging, and may be juxtaposed with the storage unit 225.

When the payment card 22 is inserted into the card slot 26, the processor 21 is operable to access the financial data chip 221 and the storage unit 225 through the controller firmware 224. The API 223 and the controller firmware 224 are able to operate according to the instructions of the payment application 270. The API 223 includes functions that are able to perform encryptions using algorithms such as Triple Data Encryption Algorithm symmetric-key block cipher (3DES), Advanced Encryption Standard (AES), RSA encryption, etc.

The storage unit 225 includes a system section 226 and a storage section 227. The system section 226 is built in with basic operation information. The storage section 227 includes a hidden area 228 and a visible area 229. The visible area 229 allows access thereto by an operating system (OS) of the mobile device 20. For example, for an Android^{®} system, the visible area 229 may be accessed using a file management program.

The hidden area 228 is not accessible by the OS, and it is not allowed to perform operations such as reading, writing or modifying content of files stored in the hidden area 228, via the OS. Instead, the hidden area 228 is only accessible by the payment application 270 via the controller firmware 224 after a certain authorization sequence has been done. Specifically, when the payment card 22 is inserted into the card slot 26 of the mobile device 20, the controller firmware 224 is configured to report to the OS that only the visible area 229 is detected. As a result, the OS will not display the hidden area 228 to a user. The hidden area 228 is accessible only when the user executes the payment application 270, andpasses the authorization sequence. Since details regarding the authorization sequence may be readily appreciated by those skilled in the art, they will not be discussed herein for the sake of brevity.

The hidden area 228 stores a virtual account associated with a bank account that is between an owner of the payment card 22 and the bank which operates the banking server 5. Data regarding the bank account is stored in the financial data chip 221. In practice, the hidden area 228 may store a plurality of virtual accounts respectively associated with a plurality of bank accounts.

In cases where the mobile device 20 is not provided with the NFC unit 23, i.e., the mobile device 20 alone is not provided with an NFC capability, the payment card 20 may be configured to include the NFC capability. Specifically, in a variation of this embodiment, the payment card 20 includes a plurality of NFC pins, and is incorporated with an NFC antenna, and may be embodied as an SDIO (Secure Digital Input Output) card that supports NFC communication functionalities.

Accordingly, in the variation of this embodiment, the card slot 26 includes a plurality of NFC terminals. The NFC terminals 612 conform with the NFC specifications ("SD Specifications Part 1 NFC Interface Simplified Addendum" issued by the SD Card Association). The NFC terminals are spaced apart from one another, and are electrically and respectively connected to the NFC pins of the payment card 22 when the payment card 20 is inserted into the card slot 26. As a result, the payment card 22 is capable of interacting with the mobile device 20 so as to enable the mobile device 20 to support NFC communication functionalities.

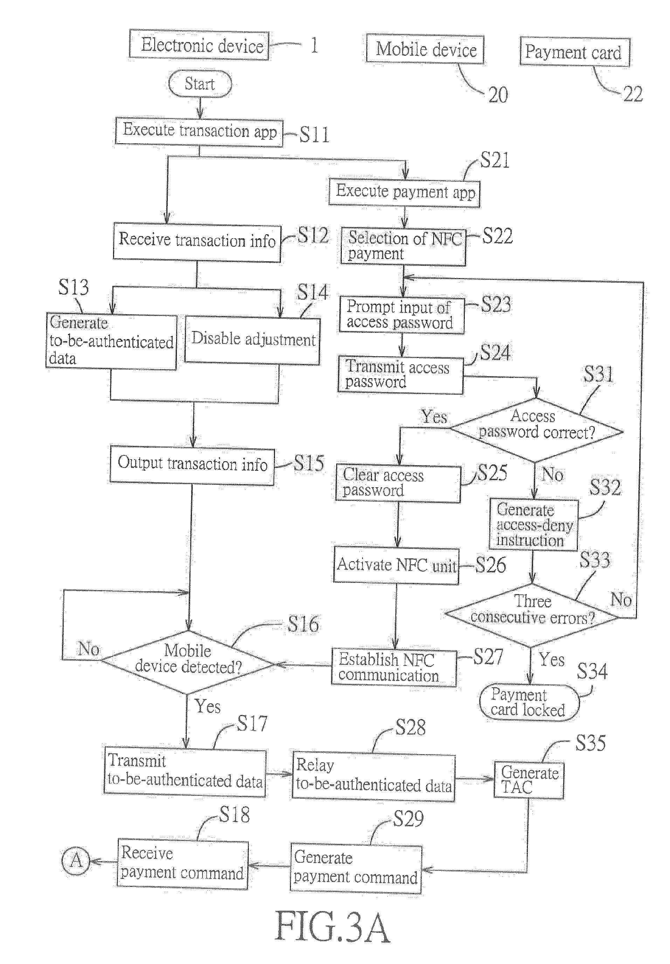

Further referring to Figure 3A, an embodiment of the mobile payment method for processing a payment for a transaction will now be described. In the following example, the electronic device 1 may be embodied using a computer, the mobile device 20 may be a smart phone inserted with the payment card 22, and the transaction is associated with purchase of a book from a book store.

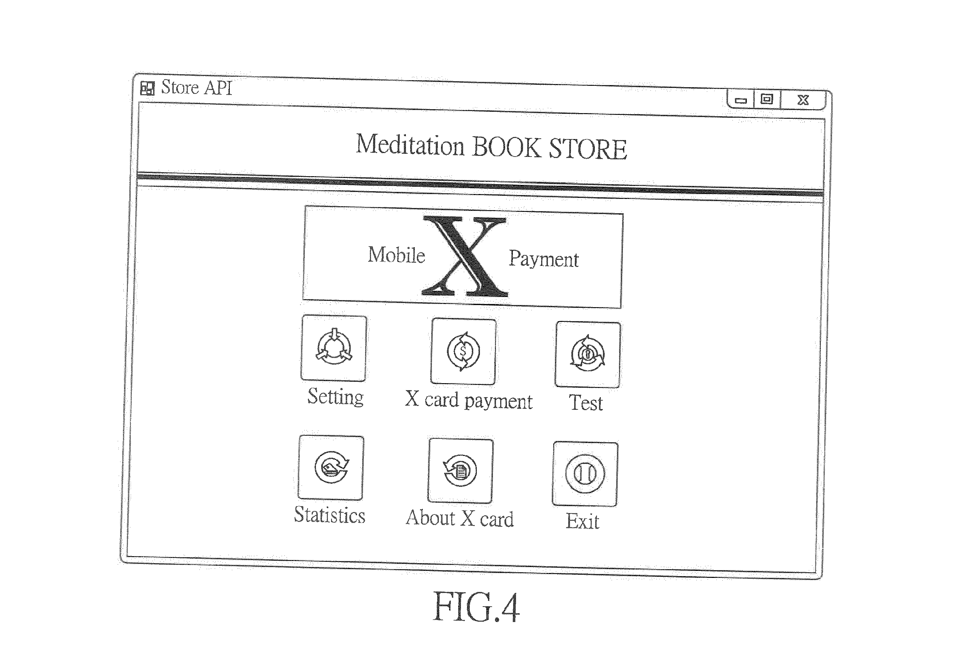

To begin with, a merchant staff at the book store initiates execution of the transaction application 120 using the electronic device 1 (see Figure 4).

In step S11, the processor module 11 of theelectronic device 1 executes the transaction application 120 stored in the memory module 12.

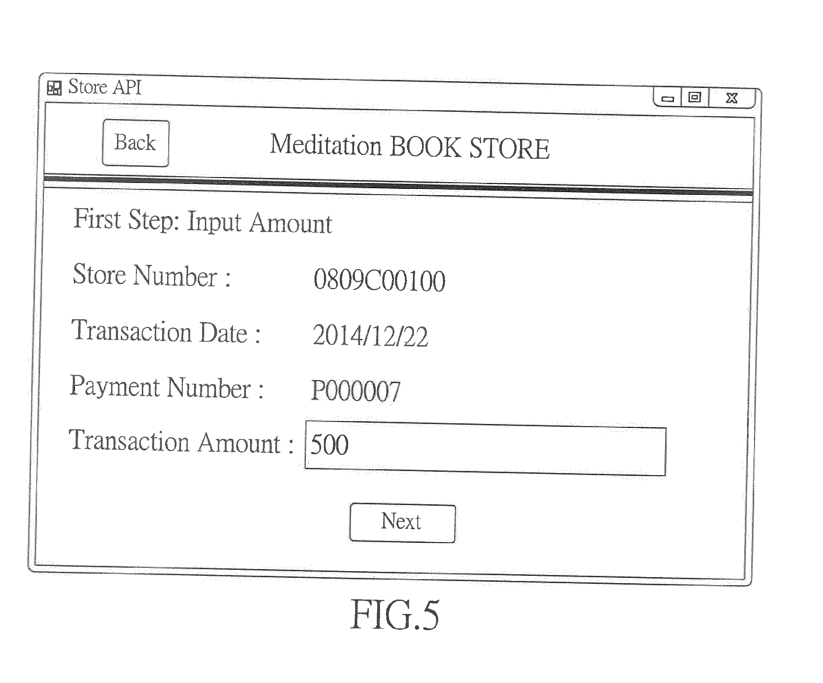

The transaction application 120 provides the merchant staff with an interface (see Figure 5) for inputting transaction information related to the transaction and to the payment for the transaction. Here, the transaction information includes details regarding the purchase of the book (e.g., information related to the store number (e.g., identification number of the book store), transaction date, payment number, transaction amount, etc.)

In step S12, the processor module 11 receives the transaction information related to the transaction and to the payment for the transaction. For example, the transaction information may be inputted to the electronic device 1 by scanning a barcode associated with the goods and/or services. Alternatively, the transaction information may be inputted by the merchant staff using the electronic device 1.

In step S13, the processor module 11 executes a security function 121 included in the transaction application 120 to generate to-be-authenticated data.

In step S14, the processor module 11 disables alterations to be made to the transaction information.

Specifically, the to-be-authenticateddata includes the transaction information, and after step S14, it is not allowed for the merchant to make any change to the transaction information. It should be noted that steps S13 and S14 may be performed in any order, or performed simultaneously.

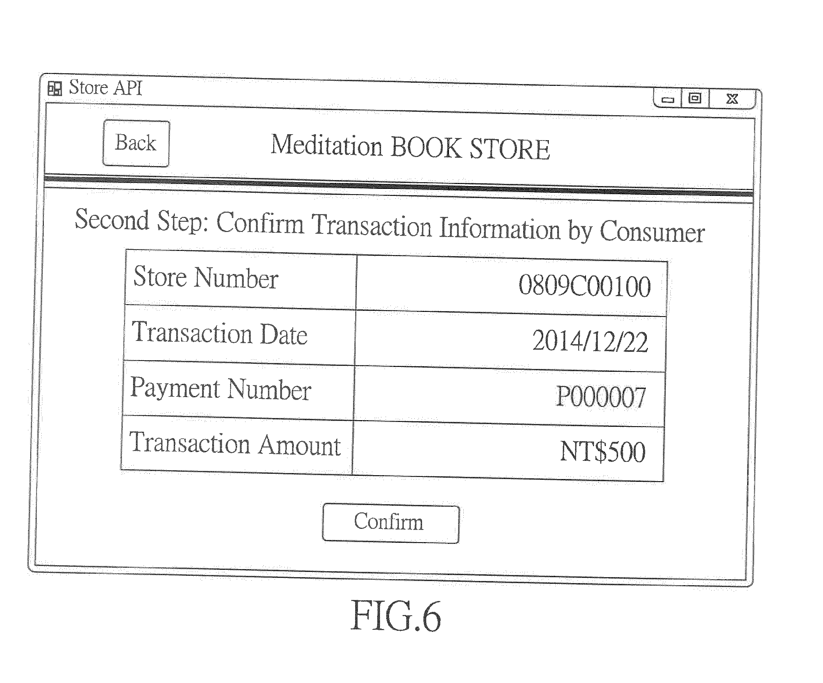

In step S15, the processor module 11 outputs, via the I/O module 14, the transaction information (see Figure 6) for confirmation by the consumer who wishes to purchase the book.

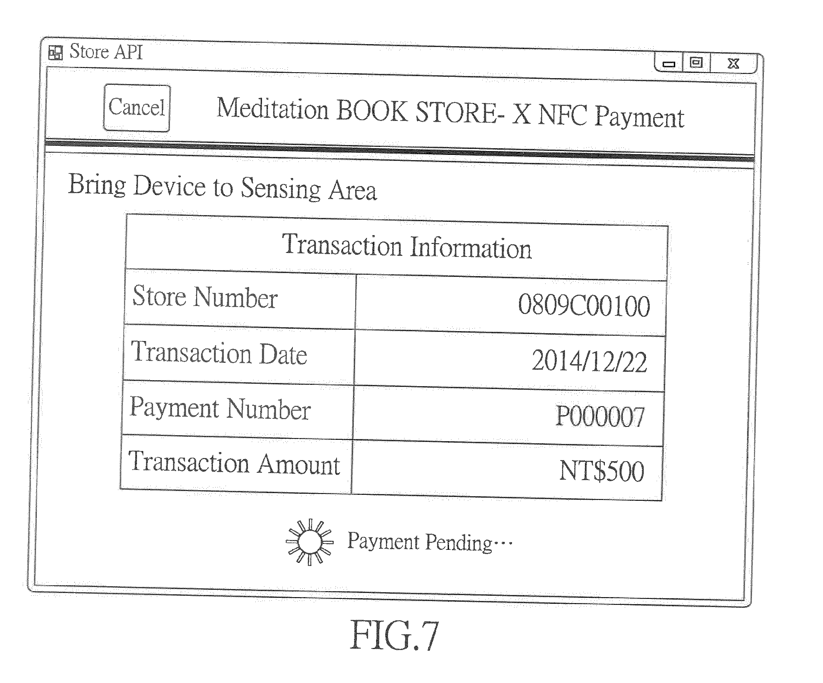

In step S16, the processor module 11 generates an instruction (see Figure 7) to prompt the consumer to bring the mobile device 20 inserted with the payment card 22 to the proximity of a payment sensing area, i.e., the NFC module 13, of the electronic device 1. When the processor module 11 detects the presence of the mobile device 20 via the NFC module 13, the processor module 11 establishes wireless short-range communication with the mobile device 20 via the NFC module 13, and the flow proceeds to step S17. Otherwise, the processor module 11 idles until the presence of the mobile device 20 is detected. Specifically, the processor module 11 automatically establishes NFC communication with the mobile device 20 as the wireless short-range communication when the electronic device 1 and the mobile device 20 are brought into proximity of each other.

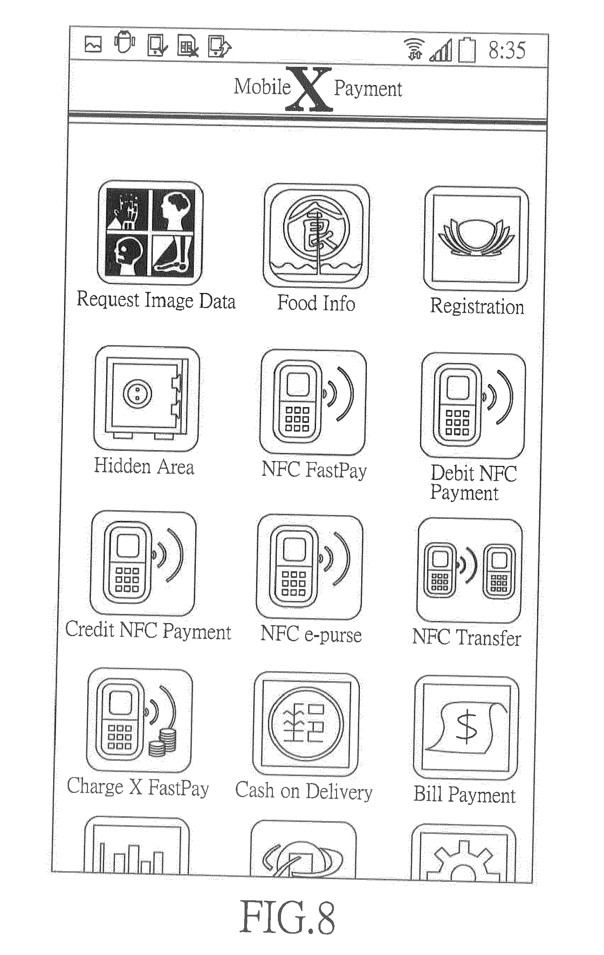

On the other hand, when the consumer intends to conduct the payment for the purchase of the book using the mobile payment apparatus 2, i.e., the mobile device 20 in combination with the payment card 22, the consumer executes the payment application 270 using the mobile device 20 (see Figure 8).

Therefore, in step S21, the processor 21 of the mobile device 20 executes the payment application 270 stored in the memory unit 27.

The payment application 270 provides a number of ways for the user to make the payment (e.g., NFC payment or cash on delivery). Here, in this case, the user selects NFC payment to make the payment through NFC technology.

In step S22, the processor 21 is instructed of the selection of NFC payment by the consumer.

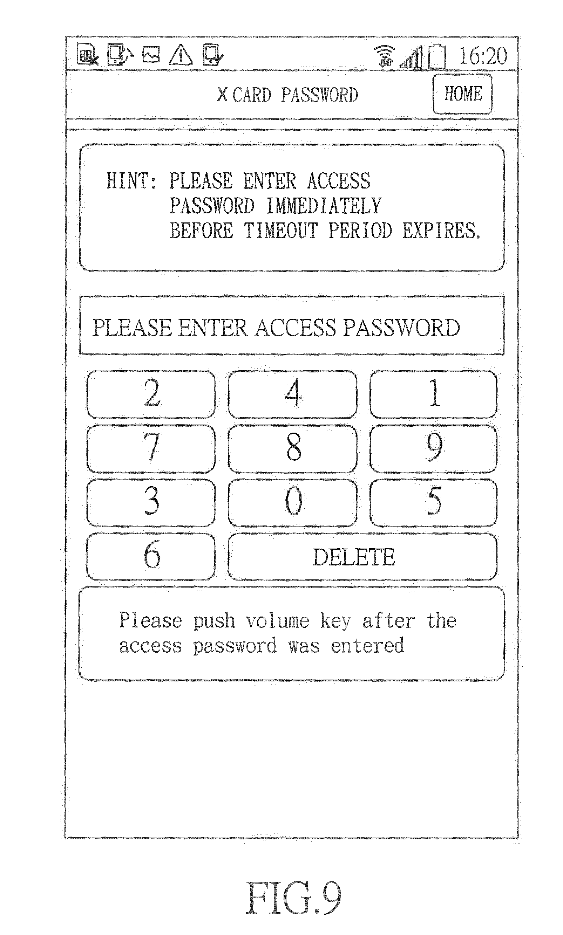

In step 5S23, the processor 21 outputs an instruction that prompts user input of an access password associated with the payment card 22 (see Figure 9).

In step S24, upon receipt of the access password, the processor 21 subsequently transmits the access password to the payment card 22 via the card slot 26.

In step S31, the payment card 22 verifies the access password. When it is verified by the payment card 22 that the access password is correct, the payment card 22 transmits an access-grant instruction to the mobile device 20, and the flow proceeds to step S25. Otherwise, the flow proceeds to step S32.

In step S32, the payment card 22 transmits an access-deny instruction to the mobile device 20, so that the mobile device 20 notifies that the access password is incorrect via the I/O unit 24. The payment card 22 counts a number of consecutive occasions that an incorrect access password is received.

In step S33, the payment card 22 determines whether the number thus counted is equal to or greater than a threshold, for example, three. When the number thus counted is neither equal to nor greater than the threshold, the flow goes back to step S23 for allowing the consumer to enter another access password. Otherwise, the flow proceeds to step S34.

In step S34, the payment card 22 is locked and access to the payment card 22 is prohibited.

In step S25, the processor 21 of the mobile device 20 clears the access password that is received in step S24 and that is temporarily stored therein. This step is implemented to prevent the access password from being retrieved by other parties.

It is noted that, in a scenario that an electronic purse is utilized for small payments, payment convenience becomes the primary concern. In this way, the steps of S23 to S25 and S31 to S34 may be omitted so as to achieve faster payment.

In step S26, the processor 21 of the mobile device 20 activates the NFC unit 23 to initiate the NFC communication functionalities.

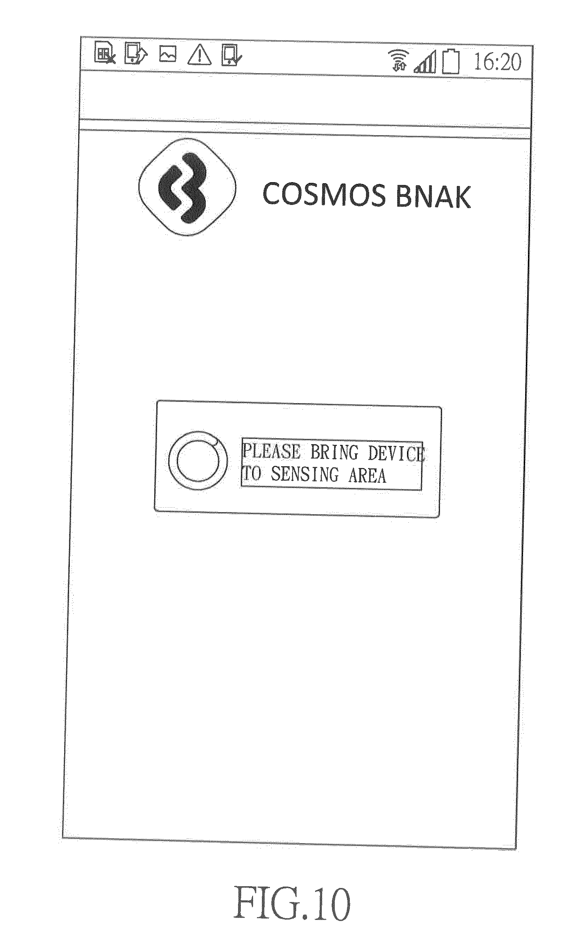

Subsequently, the consumer is prompted by the mobile device 20 to bring the mobile device 20 into proximity of the payment sensing area (i.e., the NFC module 13) of the electronic device 1 (see Figure 10).

Afterward, in step S27, the processor 21 of the mobile device 20 automatically establishes the wireless short-range communication, i.e., the NFC communication, with the electronic device 1 via the NFC unit 23 when the mobile device 20 is brought into proximity of the electronic device 1.

In step S17, after the NFC communication has been established between the electronic device 1 and the mobile device 20 in step S27 (i.e., the mobile device 20 is detected by the electronic device 1 in step S16), during the NFC communication, the processor module 11 of the electronic device 1 transmits the to-be-authenticated data to the mobile device 20 through the NFC communication.

In step S28, during the NFC communication, the processor 21 of the mobile device 20 relays the to-be-authenticated data to the payment card 22.

In step S35, during the NFC communication, the payment card 22 generates a transaction authentication code (TAC) based on the to-be-authenticated data using a secret key stored in the payment card 22, and transmits the TAC to the mobile device 20.

Specifically, the payment card 22 stores, in one of the financial data chip 221 and the hidden area 228, a secret key corresponding to the virtual account which the consumer intends to use for payment. As such, the payment card 22 retrieves the secret key based on the virtual account for generating the TAC. It is noted that the banking system 4 of the banking server 5 is provided with the same secret key corresponding the virtual account for identifying validity of the payment card 22.

In step S29, during the NFC communication, the processor 21 of the mobile device 20 executing the payment application 270 composes a payment command using the TAC. The payment command includes at least the virtual account, the transaction information and the TAC, and is encrypted. The mobile device 20 subsequently transmits the payment command to the electronic device 1 through the NFC communication.

In step S18, during the NFC communication, the processor module 11 of the electronic device 1 receives the payment command from the mobile device 20 through the NFC communication.

It is noted that the aforementioned steps S17, S28, S35, S29 and S18 are performed during the NFC communication, and after these steps have been completed, an indication may be made by at least one of the electronic device 1 and the mobile device 20 to notify the consumer to remove the mobile device 20 from the proximity of the electronic device 1 so as to terminate the NFC communication.

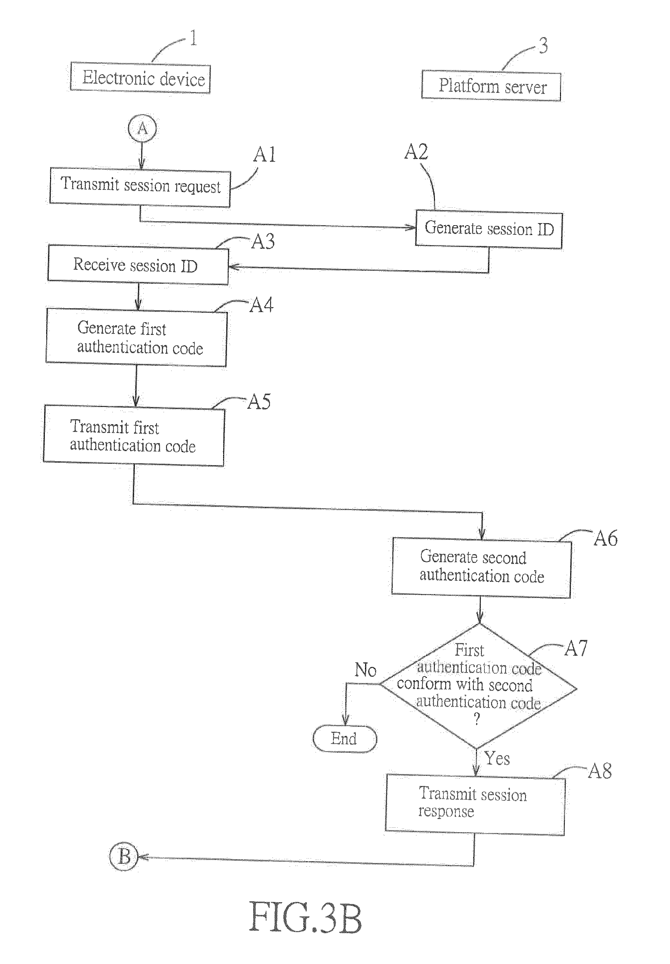

Referring to Figure 3B, after step S18, theelectronic device 1 attempts to establish a session with the platform server 3 of the banking server 5. The session is for providing a secure communication channel between the electronic device 1 and the platform server 3, and for identifying validity of the electronic device 1.

In step A1, the processor module 11 of the electronic device 1 executing the transaction application 120 transmits a session request to the platform server 3.

In step A2, the platform server 3 generates a session identification ID) in response to receipt of the session request, and transmits the session ID to the electronic device 1.

In step A3, the processor module 11 of the electronic device 1 receives the session ID.

In step A4, the processor module 11 generates a first authentication code based on the session ID thus received and a first identification key that is pre-stored in advance in the electronic device 1.

In step A5, the processor module 11 transmits the first authentication code to the platform server 3.

In step A6, the platform server 3, based on the electronic device 1 from which the first authentication code is transmitted, finds a second identification key which is pre-stored in the banking server 5, which corresponds to the first identification key of the electronic device 1, and which is dedicated to the electronic device 1. The platform server 3 subsequently generates a second authentication code based on the session ID, which is generated in response to receipt of the session request in step A2, and the second identification key thus found.

In step A7, the platform server 3 determine whether the first authentication code received from the electronic device 1 in step A5 conforms with the second authentication code generated in step A6. When it is determined that the first authentication code conforms with the second authentication code, the flow proceeds to step A8. Otherwise, the platform server 3 determines that the electronic device 1 failed to generate a valid first authentication code, and the flow is terminated.

In step A8, the platform server 3 transmits a session response to the electronic device 1 so as to establish the session and to allow the transaction to proceed.

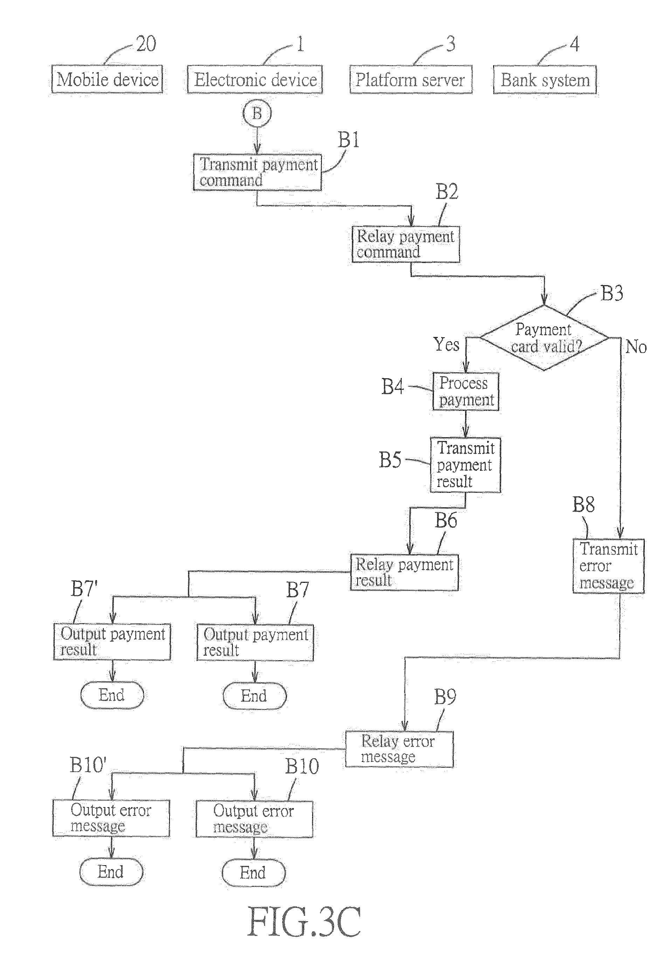

Referring to Figure 3C, after the platform server 3 allows the transaction to proceed, in step B1, the processor module 11 of the electronic device 1 transmits the payment command received in step S18, via the communication module 15, to the platform server 3 under the session. Specifically, the transmission is executed using Secured Sockets Layer (SSL) protocol.

In step B2, the platform server 3 in turn transmits the payment command to the bank system 4 through the dedicated channel.

In step B3, in response to receipt of the payment command, the bank system 4 decrypts the received payment command, and identifies validity of the payment card 22 based on the payment command. Specifically, the bank system 4 generates a confirmation code based on the to-be-authenticated data included in the payment command using the same secret key stored in the payment card 22 (e.g., in the financial data chip 221 or the hidden area 228). In some embodiments, the secret key for generating the confirmation code may be included in the payment command, and transmitted by the platform server 3 to the bank system 4.

The bank system 4 then compares the TAC and the confirmation code. When it is determined that the confirmation code conforms with the TAC, the bank system 4 determines that the payment card 22 is valid, and that the transaction information was not altered during transmission. The flow then proceeds to step B4. Otherwise, the flow proceeds to step B8.

In step B4, the bank system 4 is configured to process the payment according to the transaction information included in the payment command. In this case, a value of the book (in this case, NT$500) is deducted from the bank account that is represented by the virtual account included in the payment command, and is transferred to an account owned by the book store.

Then, in step B5, the bank system 4 generates a payment result indicating that the payment has been processed, and transmits the payment result to the platform server 3.

In turn, in step B6, the platform server 3 relays the payment result to the electronic device 1. The transmission of the payment result to the electronic device 1 is similarly under the session and uses the SSL protocol. Moreover, the platform server 3 further relays the payment result to the mobile device 20.

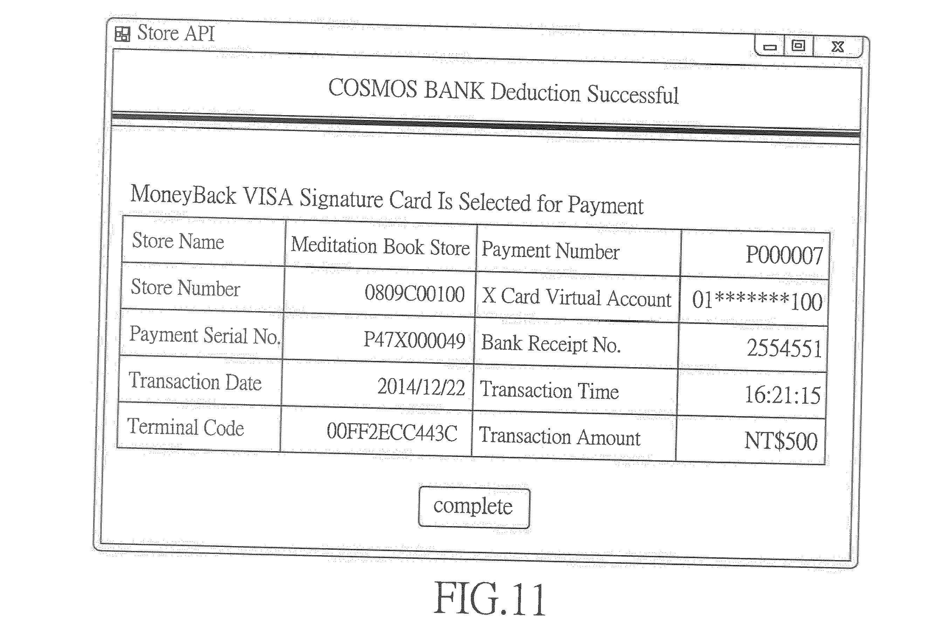

Afterward, in step B7, in response to receipt of the payment result, the processor module 11 of the electronic device 1 outputs, via the I/O module 14, the payment result (see Figure 11) to notify the merchant staff a result of the payment. In this way, the payment is processed, and the customer may obtain the goods/services, e.g., the book from the merchant staff.

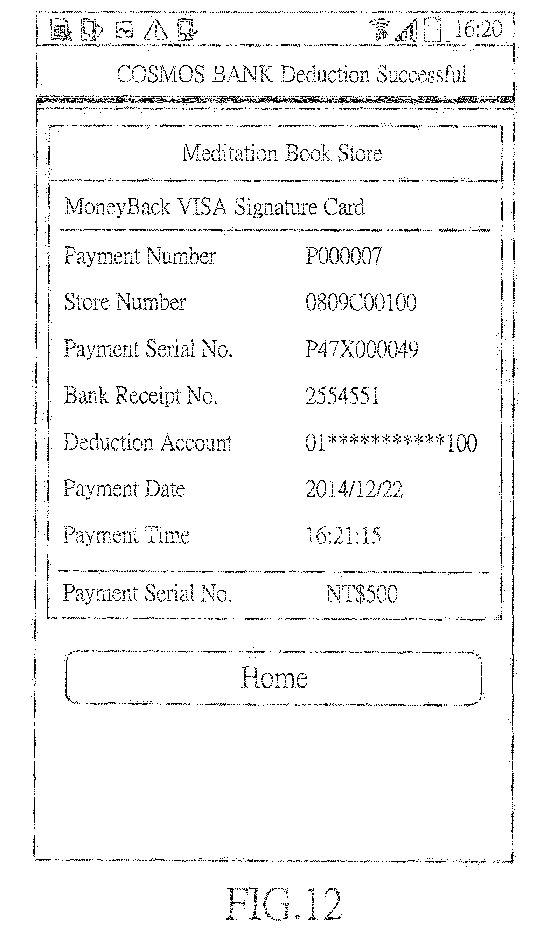

Similarly, in step B7', in response to receipt of the payment result, the processor 21 of the mobile device 20 outputs, via the I/O unit 24, the payment result (see Figure 12) to notify the consumer the result of the payment.

In step B3, when it is determined that the confirmation code does not conform with the TAC, the bank system 4 determines that either the payment card 22 is invalid, or the transaction information was altered during transmission. As a result, in step B8, the bank system 4 generates and transmits an error message to the platform server 3.

In step B9, the platform server 3 relays the error message to the electronic device 1, which outputs the error message in step B10.

Similarly, in step B9, the platform server 3 also relays the error message to the mobile device 20, which outputs the error message in step B10'. As a result, the transaction will not be processed.

In one example, the mobile payment method is applicable in cases where the goods/services are provided to the customer via delivery, and the payment is made after the goods/services have been delivered, i.e., cash on delivery. A delivery personnel may bring along an electronic device 1 installed with the transaction application 120, and after the customer confirms the goods/services, operate the electronic device 1 to perform the mobile payment method. As a result, the delivery personnel is not required to bring cash during the trip.

The mobile payment method is also applicable in cases where the goods/services are provided to the customer by a vending machine. After the payment is carried out in step B7, the vending machine provides the goods.

Further, the mobile payment method of the present disclosure may be applicable to money transfer using two smart phones. For example, a remittee operates a first smart phone to execute the transaction application 120 to cause the first smart phone to perform the aforementioned steps associated with the electronic device 1, and a remitter operates a second smart phone inserted with a payment card to execute the payment application 270 to cause the second smart phone to performed the aforementioned steps associated with the mobile device 20 and the payment card 22, so as to achieve money transfer using two smart phones by simply contacting them together or bringing them into proximity of each other.

To sum up, by identifying validity of the payment card 22 based on the payment command that is generated by the mobile device 20, payment made by a fake card can be detected. Moreover, by transmitting the payment command corresponding to the transaction information to the banking server 5 in real time, each payment for the transaction can be processed timey. In this way, losses resulting from payment fraud or transaction records mismatch may be prevented.

While the present disclosure has been described in connection with what are considered the exemplary embodiments, it is understood that this disclosure is not limited to the disclosed embodiments but is intended to cover various arrangements included within the spirit and scope of the broadest interpretation so as to encompass all such modifications and equivalent arrangements.

## Claims

1. A mobile payment method to be implemented using an electronic device (1) which is configured to interact with a mobile device (20) that is provided with a payment card (22), the electronic device (1) communicating with a payment institution server (5), the mobile payment method **characterized by** the steps of:
receiving transaction information related to a transaction and to a payment for the transaction;
establishing wireless short-range communication with the mobile device (20);
during the wireless short-range communication, transmitting the transaction information to the mobile device (20) through the wireless short-range communication;
during the wireless short-range communication, receiving a payment command from the mobile device (20) through the wireless short-range communication, the payment command being generated by the mobile device (20) based on at least the transaction information;
establishing a session with the payment institution server (5), the session providing a secure communication channel between the electronic device (1) and the payment institution server (5);
transmitting the payment command to the payment institution server (5) under the session, the payment command enabling the payment institution server (5) to identify validity of the payment card (22) based on the payment command in response to receipt of the payment command and to process the payment according to the transaction information included in the payment command after identifying the payment card (22) as valid; and
receiving a payment result from the payment institution server (5) under the session, the payment result being generated by the payment institution server (5) after completing the payment.

2. The mobile payment method according to Claim 1, the electronic device (1) and the mobile device (20) being provided with Near Field Communication 'NFC' capabilities, the mobile payment method **characterized in that** the step of establishing wireless short-range communication includes:
automatically establishing an NFCcommunication with the mobile device (20) as the wireless short-range communication when the electronic device (1) and the mobile device (20) are brought into proximity of each other.

3. The mobile payment method according to Claim 2, prior to the step of establishing wireless short-range communication, further **characterized by** the step of:
generating to-be-authenticated data that includes the transaction information;
wherein the step of transmitting the transaction information includes, during the NFC communication, transmitting the to-be-authenticated data to the mobile device (20) through the NFC communication;
wherein, in the step of receiving a payment command, during the NFC communication, the to-be-authenticated data enables
the mobile device (20) to relay the to-be-authenticated data to the payment card (22),
the payment card (22) to generate a transaction authentication code ,TAC, based on the to-be-authenticated data and to transmit the TAC to the mobile device (20), and
the mobile device (20) to compose the payment command using the TAC and to transmit the payment command to the electronic device (1) through the NFC communication.

4. The mobile payment method according to Claim 3, **characterized in that**
in the step of receiving a payment command, during the NFC communication, the to-be-authenticated data further enables the payment card (22) to generate the TAC using a secret key stored in the payment card (22) ; and
in the step of transmitting the payment command, the payment command further enables the payment institution server (5) to
generate a confirmation code based on the to-be-authenticated data included in the payment command using the same secret key, and
compare the TAC and the confirmation code, so as to identify validity of the payment card (22).

5. The mobile payment method according to Claim 1, **characterized in that**, the step of establishing a session includes the sub-steps of:
transmitting a session request to the payment institution server (5), the session request enabling the payment institution server (5) to generate a session identification , ID, in response to receipt of the session request and to transmit the session ID to the electronic device (1);
after receiving the session ID, generating a first authentication code based on the session ID and a first identification key pre-stored in the electronic device (1);
transmitting the first authentication code to the payment institution server (5), the first authentication code enabling the payment institution server (5) to
find a second identification key which is pre-stored in the payment institution server (5) and which corresponds to the first identification key of the electronic device (1),
generate a second authentication code based on the session ID generated in response to receipt of the session request and the second identification key thus found,
determine whether the first authentication code received from the electronic device (1) conforms with the second authentication code thus generated, and
transmit a session response to the electronic device (1) so as to establish the session when it is determined that the first authentication code conforms with the second authentication code.

6. The mobile payment method according to Claim 1, further **characterized by**, after the step of receiving transaction information, the step of:
disabling alterations to be made on the transaction information.

7. A mobile payment method to be implemented using a mobile device (20) which is provided with a payment card (22) and which is configured to interact with an electronic device (1), the mobile device (20) and the electronic device (1) communicating with a payment institution server (5), the mobile payment method **characterized by** the steps of:
establishing, by the mobile device (20), a wireless shot-range communication with the electronic device (1);
during the wireless short-range communication, receiving, by the mobile device (20), transaction information from the electronic device (1) through the wireless short-range communication, the transaction information being related to a transaction and to a payment for the transaction;
during the wireless short-range communication, generating a payment command based on at least the transaction information, and transmitting the payment command thus generated to the electronic device (1) through the wireless short-range communication, the payment command being provided by the electronic device (1) to the payment institution server (5) and enabling the payment institution server (5) to identify validity of the payment card (22) based on the payment command in response to receipt of the payment command and to process the payment according to the transaction information included in the payment command after identifying the payment card (22) as valid; and
receiving, by the mobile device (20), a payment result from the payment institution server (5), the payment result being generated by the payment institution server (5) after completing the payment.

8. The mobile payment method according to Claim 7, the mobile device (20) and the electronic device (1) being provided with Near Field Communication 'NFC' capabilities, the mobile payment method **characterized in that** the step of establishing a wireless shot-range communication includes:
automatically establishing, by the mobile device (20), an NFC communication with the electronic device (1) as the wireless short-range communication when the electronic device (1) and the mobile device (20) are brought into proximity of each other.

9. The mobile payment method according to Claim 8, **characterized in that**:
the step of receiving transaction information includes receiving, by the mobile device (20), to-be-authenticated data from the electronic device (1) during the NFC communication, the to-be-authenticated data being generated by the electronic device (1) and including the transaction information; and
the step of generating a payment command includes, during the NFC communication,
relaying, by the mobile device (20), the to-be-authenticated data to the payment card (22),
by the payment card (22), generating a transaction authentication code 'TAC' based on the to-be-authenticated data, and transmitting the TAC to the mobile device (20), and
by the mobile device (20), composing the payment command using the TAC, and transmitting the payment command to the electronic device (1) through the NFC communication, the payment command being transmitted by the electronic device (1) to the payment institution server (5) under a session established therebetween.

10. The mobile payment method according to Claim 9, **characterized in that**:
the step of generating a payment command further includes generating, by the payment card (22), the TAC using a secret key stored in the payment card (22) ; and
the payment command further enables the payment institution server (5) to
generate a confirmation code based on the to-be-authenticated data included in the payment command using the same secret key, and
compare the TAC and the confirmation code, so as to identify validity of the payment card (22).

11. The mobile payment method of Claim 7, prior to the step of establishing a wireless shot-range communication, further **characterized by**:
outputting, by the mobile device (20), an instruction to prompt user input of an access password;
upon receipt of the access password, transmitting, by the mobile device (20), the access password to the payment card (22);
by the payment card (22), verifying the access password, and transmitting an access-grant instruction to the mobile device (20) when the access password is correct; and
upon receipt of the access-grant instruction, clearing, by the mobile device (20), the access password temporarily stored therein.

12. Amobile payment apparatus (2) configured to interact with an electronic device (1), which communicates with a payment institution server (5), the mobile payment apparatus (2) **characterized by**:
a mobile device (20) which includes
a processor (21),
a memory unit (27) coupled to said processor (21) and storing a payment application therein,
a card slot (26) coupled to said processor (21), and removably inserted with a payment card (22), thereby enabling access to the payment card (22) using said mobile device (20),
a short-range communication unit (23) coupled to said processor (21) and configured to communicate with the electronic device (1); and
a communication unit (25) coupled to said processor (21) and configured to communicate with the payment institution server (5);
wherein said payment application, when executed by said processor (21), causes said mobile payment apparatus (2) to
establish a wireless shot-range communication with the electronic device (1),
during the wireless short-range communication, receive transaction information from the electronic device (1) through the wireless short-range communication, the transaction information being related to a transaction and to a payment for the transaction,
during the wireless short-range communication, generate a payment command based on at least the transaction information, and transmit the payment command thus generated to the electronic device (1) through the wireless short-range communication, the payment command being provided by the electronic device (1) to the payment institution server (5) and enabling the payment institution server (5) to identify validity of the payment card (22) based on the payment command in response to receipt of the payment command and to process the payment according to the transaction information included in the payment command after identifying the payment card (22) as valid, and
receive a payment result from the payment institution server (5), the payment result being generated by the payment institution server (5) after completing the payment.

## Amended claims

### Amended claims in accordance with Rule 137(2) EPC.

1. A mobile payment method to be implemented using an electronic device (1) which is configured to interact with a mobile device (20) that is provided with a payment card (22), the payment card (22) being a non-volatile memory card, the electronic device (1) communicating with a payment institution server (5), the mobile payment method **characterized by** the steps of:
receiving transaction information related to a transaction and to a payment for the transaction;
establishing wireless short-range communication with the mobile device (20);
during the wireless short-range communication, transmitting the transaction information to the mobile device (20) through the wireless short-range communication;
during the wireless short-range communication, receiving a payment command from the mobile device (20) through the wireless short-range communication, the payment command being generated by the mobile device (20) based on at least the transaction information;
establishing a session with the payment institution server (5), the session providing a secure communication channel between the electronic device (1) and the payment institution server (5);
transmitting the payment command to the payment institution server (5) under the session, the payment command enabling the payment institution server (5) to identify validity of the payment card (22) based on the payment command in response to receipt of the payment command and to process the payment according to the transaction information included in the payment command after identifying the payment card (22) as valid; and
receiving a payment result from the payment institution server (5) under the session, the payment result being generated by the payment institution server (5) after completing the payment.

2. The mobile payment method according to Claim 1, the electronic device (1) and the mobile device (20) being provided with Near Field Communication, NFC, capabilities, the mobile payment method **characterized in that** the step of establishing wireless short-range communication includes:
automatically establishing an NFC communication with the mobile device (20) as the wireless short-range communication when the electronic device (1) and the mobile device (20) are brought into proximity of each other.

3. The mobile payment method according to Claim 2, prior to the step of establishing wireless short-range communication, further **characterized by** the step of:
generating to-be-authenticated data that includes the transaction information;
wherein the step of transmitting the transaction information includes, during the NFC communication, transmitting the to-be-authenticated data to the mobile device (20) through the NFC communication;
wherein, in the step of receiving a payment command, during the NFC communication, the to-be-authenticated data enables
the mobile device (20) to relay the to-be-authenticated data to the payment card (22),
the payment card (22) to generate a transaction authentication code, TAC, based on the to-be-authenticated data and to transmit the TAC to the mobile device (20), and
the mobile device (20) to compose the payment command using the TAC and to transmit the payment command to the electronic device (1) through the NFC communication.

4. The mobile payment method according to Claim 3, **characterized in that**
in the step of receiving a payment command, during the NFC communication, the to-be-authenticated data further enables the payment card (22) to generate the TAC using a secret key stored in the payment card (22) ; and
in the step of transmitting the payment command, the payment command further enables the payment institution server (5) to
generate a confirmation code based on the to-be-authenticated data included in the payment command using the same secret key, and
compare the TAC and the confirmation code, so as to identify validity of the payment card (22).

5. The mobile payment method according to Claim 1, **characterized in that**, the step of establishing a session includes the sub-steps of:
transmitting a session request to the payment institution server (5), the session request enabling the payment institution server (5) to generate a session identification , ID, in response to receipt of the session request and to transmit the session ID to the electronic device (1);
after receiving the session ID, generating a first authentication code based on the session ID and a first identification key pre-stored in the electronic device (1) ;
transmitting the first authentication code to the payment institution server (5), the first authentication code enabling the payment institution server (5) to
find a second identification key which is pre-stored in the payment institution server (5) and which corresponds to the first identification key of the electronic device (1),
generate a second authentication code based on the session ID generated in response to receipt of the session request and the second identification key thus found,
determine whether the first authentication code received from the electronic device (1) conforms with the second authentication code thus generated, and
transmit a session response to the electronic device (1) so as to establish the session when it is determined that the first authentication code conforms with the second authentication code.

6. The mobile payment method according to Claim 1, further **characterized by**, after the step of receiving transaction information, the step of:
disabling alterations to be made on the transaction information.

7. A mobile payment method to be implemented using a mobile device (20) which is provided with a payment card (22) and which is configured to interact with an electronic device (1), the payment card (22) being a non-volatile memory card, the mobile device (20) and the electronic device (1) communicating with a payment institution server (5), the mobile payment method **characterized by** the steps of:
establishing, by the mobile device (20), a wireless shot-range communication with the electronic device (1) ;
during the wireless short-range communication, receiving, by the mobile device (20), transaction information from the electronic device (1) through the wireless short-range communication, the transaction information being related to a transaction and to a payment for the transaction;
during the wireless short-range communication, generating a payment command based on at least the transaction information, and transmitting the payment command thus generated to the electronic device (1) through the wireless short-range communication, the payment command being provided by the electronic device (1) to the payment institution server (5) and enabling the payment institution server (5) to identify validity of the payment card (22) based on the payment command in response to receipt of the payment command and to process the payment according to the transaction information included in the payment command after identifying the payment card (22) as valid; and
receiving, by the mobile device (20), a payment result from the payment institution server (5), the payment result being generated by the payment institution server (5) after completing the payment.

8. The mobile payment method according to Claim 7, the mobile device (20) and the electronic device (1) being provided with Near Field Communication, NFC, capabilities, the mobile payment method **characterized in that** the step of establishing a wireless shot-range communication includes:
automatically establishing, by the mobile device (20), an NFC communication with the electronic device (1) as the wireless short-range communication when the electronic device (1) and the mobile device (20) are brought into proximity of each other.

9. The mobile payment method according to Claim 8, **characterized in that**:
the step of receiving transaction information includes receiving, by the mobile device (20), to-be-authenticated data from the electronic device (1) during the NFC communication, the to-be-authenticated data being generated by the electronic device (1) and including the transaction information; and
the step of generating a payment command includes, during the NFC communication,
relaying, by the mobile device (20), the to-be-authenticated data to the payment card (22),
by the payment card (22), generating a transaction authentication code, TAC, based on the to-be-authenticated data, and transmitting the TAC to the mobile device (20), and
by the mobile device (20), composing the payment command using the TAC, and transmitting the payment command to the electronic device (1) through the NFC communication, the payment command being transmitted by the electronic device (1) to the payment institution server (5) under a session established therebetween.

10. The mobile payment method according to Claim 9, **characterized in that**:
the step of generating a payment command further includes generating, by the payment card (22), the TAC using a secret key stored in the payment card (22); and
the payment command further enables the payment institution server (5) to
generate a confirmation code based on the to-be-authenticated data included in the payment command using the same secret key, and
compare the TAC and the confirmation code, so as to identify validity of the payment card (22).

11. The mobile payment method of Claim 7, prior to the step of establishing a wireless shot-range communication, further **characterized by**:
outputting, by the mobile device (20), an instruction to prompt user input of an access password;
upon receipt of the access password, transmitting, by the mobile device (20), the access password to the payment card (22);
by the payment card (22), verifying the access password, and transmitting an access-grant instruction to the mobile device (20) when the access password is correct; and
upon receipt of the access-grant instruction, clearing, by the mobile device (20), the access password temporarily stored therein.

12. A mobile payment apparatus (2) configuredto interact with an electronic device (1), which communicates with a payment institution server (5), the mobile payment apparatus (2) **characterized by**:
a mobile device (20) which includes
a processor (21),
a memory unit (27) coupled to said processor (21) and storing a payment application therein,
a card slot (26) coupled to said processor (21), and removably inserted with a payment card (22) that is a non-volatile memory card, thereby enabling access to the payment card (22) using said mobile device (20),
a short-range communication unit (23) coupled to said processor (21) and configured to communicate with the electronic device (1); and
a communication unit (25) coupled to said processor (21) and configured to communicate with the payment institution server (5);
wherein said payment application, when executed by said processor (21), causes said mobile payment apparatus (2) to
establish a wireless shot-range communication with the electronic device (1),
during the wireless short-range communication, receive transaction information from the electronic device (1) through the wireless short-range communication, the transaction information being related to a transaction and to a payment for the transaction,
during the wireless short-range communication, generate a payment command based on at least the transaction information, and transmit the payment command thus generated to the electronic device (1) through the wireless short-range communication, the payment command being provided by the electronic device (1) to the payment institution server (5) and enabling the payment institution server (5) to identify validity of the payment card (22) based on the payment command in response to receipt of the payment command and to process the payment according to the transaction information included in the payment command after identifying the payment card (22) as valid, and
receive a payment result from the payment institution server (5), the payment result being generated by the payment institution server (5) after completing the payment.

13. The mobile payment method according to Claim 4, the payment card (22) being a micro Secure Digital, SD, card, and including a financial data chip (221) and a storage unit (225) that includes a hidden area (228), the payment card (22) storing, in one of the financial data chip (221) and the hidden area (228), the secret key corresponding to a virtual account to be used for payment, the hidden area (228) storing the virtual account associated with a bank account that is between an owner of the payment card (22) and a bank which operates the payment institution server (5), the mobile payment method **characterized in that**:
in the step of receiving a payment command, during the NFC communication, the to-be-authenticated data enables the payment card (22) to retrieve the secret key based on the virtual account for generating the TAC.

14. The mobile payment method according to Claim 10, the payment card (22) being a micro Secure Digital, SD, card, and including a financial data chip (221) and a storage unit (225) that includes a hidden area (228), the payment card (22) storing, in one of the financial data chip (221) and the hidden area (228), the secret key corresponding to a virtual account to be used for payment, the hidden area (228) storing the virtual account associated with a bank account that is between an owner of the payment card (22) and a bank which operates the payment institution server (5), the mobile payment method **characterized in that**:
the step of generating a payment command further includes retrieving, by the payment card (22), the secret key based on the virtual account for generating the TAC.

15. The mobile payment apparatus (2) according to Claim 12, the payment card (22) being a micro Secure Digital , SD, card, and including a financial data chip (221) and a storage unit (225) that includes a hidden area (228), the payment card (22) storing, in one of the financial data chip (221) and the hidden area (228), a secret key corresponding to a virtual account to be used for payment, the hidden area (228) storing the virtual account associated with a bank account that is between an owner of the payment card (22) and a bank which operates the payment institution server (5), the mobile payment apparatus **characterized in that**:
said mobile device (20) receives to-be-authenticated data from said electronic device (1) during the wireless shot-range communication, the to-be-authenticated data being generated by the electronic device (1) and including the transaction information;
said mobile device (20) relays the to-be-authenticated data to said payment card (22);
said payment card (22) retrieves the secret key based on the virtual account for generating a transaction authentication code, TAC, based on the to-be-authenticated data, and transmits the TAC to said mobile device (20); and
said mobile device (20) composes the payment command using the TAC, and transmits the payment command to said electronic device (1) through the NFC communication.
